# EUROPÄISCHE PATENTSCHRIFT

(11) **EP 1 196 802 B1**
(45) Veröffentlichungstag und Bekanntmachung des Hinweises auf die Patenterteilung: **14.09.2005**
(21) Anmeldenummer: 00949325.5
(22) Anmeldetag: 13.07.2000
(51) Int. Cl.: G02B 7/00, G02B 7/182, G02B 23/06

(54) **OPTISCHES SYSTEM**
OPTICAL SYSTEM
SYSTEME OPTIQUE

(30) Priorität: 15.07.1999 DE 19933248
(43) Veröffentlichungstag der Anmeldung: 17.04.2002
(73) Patentinhaber: Carl Zeiss Optronics GmbH, 73447 Oberkochen (DE); Deutsches Zentrum für Luft- und Raumfahrt e.V., 51147 Köln (DE)
(72) Erfinder: SCHÖPPACH, Armin, D-73431 Aalen (DE); KAUFMANN, Paul, D-73433 Aalen (DE); PETASCH, Thomas, D-73431 Aalen (DE); KRENKER Walter, D-71272 Renningen (DE); RENZ, Ralph, D-71069 Sindelfingen (DE)
(74) Vertreter: Gnatzig, Klaus
(86) Internationale Anmeldenummer: PCT/EP2000/006661
(87) Internationale Veröffentlichungsnummer: WO 2001/006294

(56) Entgegenhaltungen:
- DE-U- 9 106 196
- US-A- 3 671 108
- US-A- 4 116 537
- US-A- 4 236 790
- US-A- 5 557 474
- PATENT ABSTRACTS OF JAPAN vol. 1996, no. 03, 29. März 1996 (1996-03-29) -& JP 07 311347 A (YASUO MATSUMOTO), 28. November 1995 (1995-11-28)
- PATENT ABSTRACTS OF JAPAN vol. 005, no. 185 (P-091), 25. November 1981 (1981-11-25) -& JP 56 113109 A (FUJITSU LTD), 5. September 1981 (1981-09-05)

## Beschreibung

Die Erfindung betrifft ein Teleskop.

Es ist beispielsweise aus der DE 39 40 924 A1 ein Spiegelteleskop mit einem Primärspiegel und einem Sekundärspiegel, die mittels einer Halterung beabstandet voneinander angeordnet sind, bekannt. Die Halterung umfaßt ein Teleskoprohr aus Zerodur®. Ebenso ist ein für die Halterung des Sekundärspiegels vorgesehener Befestigungsstern aus Zerodur®, der mit dem Teleskoprohr verbunden ist.

Aufgrund des niedrigen Wärmeausdehnungskoeffizienten ist das Material Zerodur® ausgewählt worden. Ein athermales Verhalten, insbesondere in dem Temperaturbereich von 20° C bis -50° C, ist bei Teleskopen für die opt. Telekommunikation, die im Weltraum eingesetzt werden, wünschenswert, da bei derartigen Verwendungen ein Nachjustieren während des Betriebes nahezu unmöglich ist.

Insbesondere sind Deformationen der Spiegel nachteilig, da damit eine Verschiebung des Brennpunktes verbunden ist. Aus solch einer Verschiebung des Brennpunktes resultiert eine Defokussierung. Durch den Einsatz von Zerodur wird annähernd ein athermales Verhalten erreicht, nachteilig ist jedoch, daß dieser keramische Werkstoff sehr spröde ist und nur in geringem Maße betastbar ist.

Weiterhin wird Invar als Werkstoff bei Teleskopen eingesetzt. Dieser Werkstoff weist jedoch einen beträchtlichen Wärmeausdehnungskoeffizienten auf, womit das Teleskop ein temperaturabhängiges Verhalten aufweist.

Aus der DE 43 26 762 A ist ein die Herstellung eines Spiegelrohlings durch Abformtechnik bekannt. Als Material ist Siliziumcarbit vorgesehen worden.

Aus der US 5,579,333 A ist es bekannt, Keramiken aus Siliziumnitrit (SiN) für die Herstellung von Industriespiegeln zu verwenden.

Auch in Objektiven für die Halbleiterlithographie treten thermisch störende Effekte auf. Durch die Erwärmung von optischen Komponenten, wie Spiegel und Linsen, ändern sich die optischen Eigenschaften der jeweiligen Komponente, insbesondere ändert sich die Brennweite.

Aufgabe der Erfindung ist ein optisches System bereitzustellen, das mindestens zwei optische Komponenten aufweist und das bei reduzierten Kosten ein nahezu athermales Verhalten aufweist.

Weiterhin lag der Erfindung die Aufgabe zugrunde ein optisches System, insbesondere Teleskop, zu schaffen, das eine erhöhte mechanische Belastbarkeit bei möglichst geringem Gewicht aufweist.

Die Aufgabe der Erfindung wird durch Merkmale des Patentanspruchs 1 gelöst.

Durch die Maßnahme, daß eine Halterung Kompensationselemente für eine temperaturabhängige Änderung eines vorbestimmten Abstandes zwischen einem ersten und zweiten optischen Element umfaßt, ist es möglich eine Veränderung der Lage der Brennpunkte der optischen Elemente aufgrund von thermischer Deformation durch die Halterung, insbesondere durch die Kompensationselemente, auszugleichen. Durch die Kompensationselemente ist es möglich die Position des zweiten optischen Elementes an die neue Brennweite des ersten optischen Elementes und umgekehrt anzupassen. Damit ist das optische System unabhängig von der Temperatur stets optimal fokussiert.

Es hat sich als vorteilhaft herausgestellt die Kompensationselemente parallel zu einer durch die optischen Elemente festgelegten optischen Achse anzuordnen. Dadurch wird die größtmögliche Längenänderung der Kompensationselemente in bezug auf die Längenerstreckung der Kompensationselemente in Richtung der optischen Achse pro Temperaturintervall erreicht.

Das für die Kompensationselemente verwendetes Material ist in Abhängigkeit von der Länge der Kompensationselemente in axialer Richtung und in Abhängigkeit von der Brennpunktverschiebung pro Temperaturintervall auszuwählen, so daß die Längenänderung der Kompensationselemente die Brennpunktverschiebung kompensiert.

Insbesondere hat es sich als vorteilhaft herausgestellt ein Material für die Kompensationselemente vorzusehen, das einen größeren Wärmeausdehnungskoeffizient als das Material der Halterung aufweist. Dadurch ist es möglich eine große Längenänderung in Abhängigkeit von der Temperaturänderung zu erreichen.

Es hat sich als vorteilhaft herausgestellt, die Kompensationselemente im Bereich des ersten optischen Elementes, insbesondere im Bereich eines Primärspiegels eines Teleskops, anzuordnen, so daß keine oder nahezu keine Temperaturdifferenz zwischen dem ersten optischen Element, insbesondere dem Spiegelkörper, und den Kompensationselementen besteht. Damit erfahren die Kompensationselemente annähernd die gleiche Temperaturänderung, wie das erste optische Element.

Es hat sich als vorteilhaft herausgestellt für die Halterung ein Material mit einem ausreichenden Wärmeleitwert und sehr kleinem Ausdehnungskoeffizienten zu verwenden, so daß bei einseitiger bzw. ungleichmäßiger Bestrahlung der Halterung bzw. des Teleskoprohres ein schneller Temperaturausgleich stattfindet und die Deformationen infolge eines Temperaturgradienten klein bleiben. Dadurch werden Spannungen in der Halterung selbst und ein Verziehen aufgrund einer lokalen Ausdehnung der Halterung und mit der Halterung fest verbundenen Bauteile, resultierend aus Temperaturgradienten, vermieden.

Insbesondere bei in Form eines Sterns ausgebildeter Aufnahme für einen Sekundärspiegel bei einem Teleskop resultiert aus einem Temperaturgradienten im Bereich der Aufnahme des Sekundärspiegels ein Verbiegen desselben, womit eine Defokussierung verbunden ist.

Durch die Verwendung eines Materials mit einem sehr kleinen Ausdehnungskoeffizient für die Halterung der optischen Elemente wird eine systemspezifische Anpassung der Kompensationselemente erleichtert oder sogar erst möglich, da dann vorrangig nur noch der Einfluß des Materials der optischen Elemente selbst berücksichtigt werden muß.

Durch die Maßnahme bei optischen Systemen mit mindestens einem Spiegel, den Spiegelkörper aus SiN herzustellen, konnten die Herstellkosten minimiert werden, was insbesondere für eine Fertigung in hohen Stückzahlen interessant ist.

Insbesondere kann bei Verwendung von SiN ein Replikationsverfahren zur Spiegelherstellung benutzt werden, mit dem auch asphärische Spiegel kostengünstig herstellbar sind, was insbesondere bei dem Einsatz in Lithographieobjektiven interessant ist. Bei der Spiegelherstellung mit dem Replikationsverfahren können sehr harte Materialien, die auch spröde und für ein Polieren ungeeignet sein können, verwendet werden. Hier kommen vor allem keramische Werkstoffe in Frage, die neben geringem Gewicht auch niedrige Ausdehnungskoeffizienten, aufweisen.

Es hat sich als vorteilhaft herausgestellt für die Halterung des Materials C/C SiC der einen mit ähnlichen physikalischen Eigenschaften vorzusehen. Insbesondere wenn die Halterung ein Teleskoprohr umfaßt, hat es sich als vorteilhaft herausgestellt, das Teleskoprohr aus C/C SiC herzustellen.

Weitere vorteilhafte Maßnahmen sind in weiteren Unteransprüchen beschrieben. Als Ausführungsbeispiel wird ein Teleskop und ein schematisch dargestelltes optisches System beschrieben.

Es zeigt:
- Figur 1:: Teleskop mit einem in Poliertechnik hergestellten Primärspiegel und einem Spiegelträger aus SiN;
- Figur 2:: Teleskop mit einem Spiegelkörper aus SiN und einem in Replikationstechnik hergestellten Primärspiegel und
- Figur 3:: optisches System.

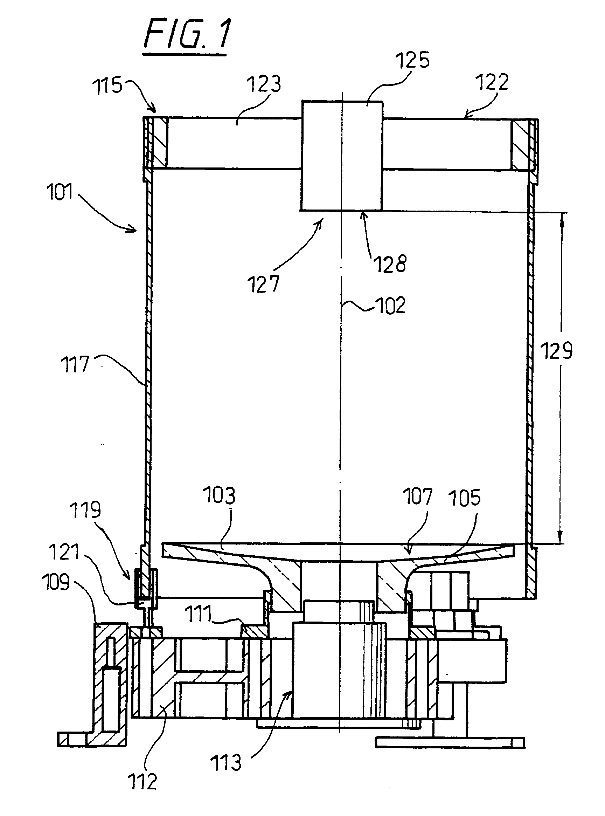

Anhand von Figur 1 wird zunächst der prinzipielle Aufbau eines Teleskopes 1 beschrieben.

Das dargestellte Teleskop 101 weist einen Primärspiegel 103 und einen Sekundärspiegel 127 auf, deren Spiegelflächen 107, 128 zugewandt zueinander angeordnet sind. Durch diese beiden Spiegel 103, 127 ist eine optische Achse 2 festgelegt. Diese beiden Spiegel sind über eine Halterung 115 miteinander verbunden und in einem vorbestimmten axialen Abstand 129 voneinander angeordnet.

In dem dargestellten Ausführungsbeispiel umfaßt die Halterung 115 ein koaxial zur optischen Achse 102 angeordnetes Teleskoprohr 117, und eine Aufnahme 122 zur Halterung des Sekundärspiegels 127 in Form eines Haltesterns 123. Vorzugsweise bestehen der Haltestern 123 und das Teleskoprohr 117 aus identischem Material zur Vermeidung von Spannungen aufgrund von differierenden Ausdehnungskoeffizienten der Materialien. In dem dargestellten Ausführungsbeispiel ist als Material C/C SiC vorgesehen, das einen ausreichenden Wärmeleitwert und einen sehr kleinen Ausdehnungskoeffizienten aufweist, so daß sich in der Halterung 115, wenn überhaupt, sich nur kurzweilig durch einseitige Bestrahlung Temperaturgradienten und Deformationen ausbilden können.

Anzustreben ist ein großer Quotient gebildet aus der Wärmeleitfähigkeit geteilt durch den Ausdehnungskoeffizienten.

Mit dem Haltestern 123 ist eine Spiegelaufnahme 125 für den Sekundärspiegel 127 verbunden. Auf dem dem Sekundärspiegel 127 abgewandten Ende des Teleskoprohres 117 sind Kompensationselemente 119 in Form von drei, im Winkelabstand von 120° angeordnete Füße 121 vorgesehen. Diese Füße 121 umgreifen einerends das Ende des Teleskoprohres 117 und sind anderenends mit einer Spiegellagerung 111 des Primärspiegel 103 verbunden. Als Kompensationselement könnte auch ein Ring aus einem Material, das einen anderen Wärmeausdehnungskoeffizienten als die Halterung aufweist, vorgesehen sein. Entscheidend ist, daß das/die Kompensationselement/e eine Erstreckung in Richtung der optischen Achse 102 aufweist/aufweisen.

Diese Spiegellagerung 111 ist auf einem Spiegelträger 112 gelagert, der seinerseits durch die Lagerelemente 109 isostatisch aufgenommen wird. Die Spiegellagerung 111 sowie der Primärspiegel 103 sind koaxial zu einem auf der optischen Achse 102 angeordneten Tubus 113, der seinerseits einen Kollimator umfaßt, angeordnet.

In der dargestellten Ausführung umfaßt der Primärspiegel 103 einen Spiegelkörper 105 aus Quarzglas, der mit einer Spiegeloberfläche durch Poliertechnik versehen ist. Die Spiegellagerung 111 ist aus Invar und der Spiegelträger 112 ist aus SiN. Für die Halterung 115 ist C/C SiC vorgesehen.

Bei diesem Teleskop 101 wird die auf den Primärspiegel auftreffende Strahlung auf den Sekundärspiegel gelenkt, wobei diese Strahlung durch Reflektion am Sekundärspiegel 127 über den Tubus 113 fokussiert wird.

Bei einer Erwärmung dieses Teleskopes 101, insbesondere des Primärspiegels 103, verschiebt sich die Brennweite des Primärspiegels 103 zu weiteren Entfernungen hin. Durch die Kompensationselemente 119, die ebenfalls im Bereich des Primärspiegels 103 angeordnet sind, wird der durch die Halterung 115 vorbestimmte Abstand 129 so vergrößert, daß keine Brennpunktverschiebung stattfindet.

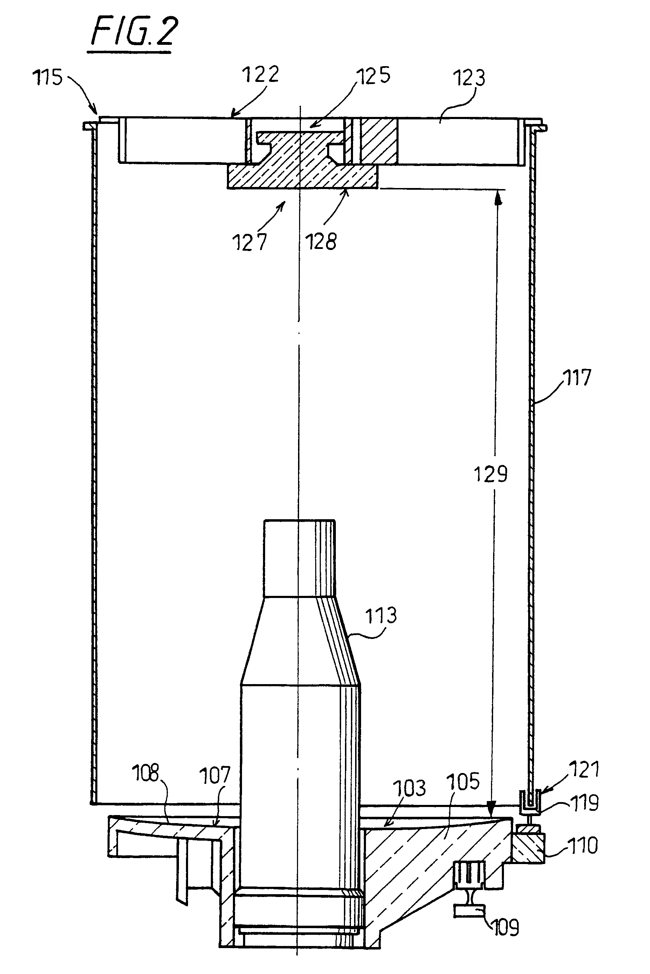

Das in Figur 2 dargestellte Ausführungsbeispiel unterscheidet sich hauptsächlich durch den Primärspiegel 103. Bei diesem Ausführungsbeispiel ist der Primärspiegel 103 in Replikationstechnik mit einem Spiegelkörper 105 aus SiN hergestellt worden.

In Replikationstechnik können insbesondere asphärische Spiegeloberflächen 108 kostengünstig hergestellt werden. Auch können sehr harte, unter Umständen spröde Materialien verwendet werden, die nicht polierbar sein müssen. Solche steifen Materialien weisen im allgemeinen einen niedrigen Wärmeausdehnungskoeffizienten auf. Aufgrund des steifen Materials für den Spiegelkörper 105 ist keine separate Spiegellagerung 111 und kein Spiegelträger 112, wie in dem Ausführungsbeispiel gemäß Figur 1 erforderlich. Aus den bei der Replikationstechnik auftretenden Spannungen in dem Spiegelkörper 105 resultieren aufgrund des Schrumpfens des Replikationsharzes nur sehr geringe Deformationen.

Der Spiegelkörper 105 ist mit Lagerelementen 109 verbunden, durch die er isostatisch aufgenommen wird. Der Spiegelkörper 105 ist auf seinem Außenradius mit Vorsprüngen 110 versehen, auf denen sich die Kompensationselemente 119, die wiederum als Füße ausgebildet sind, sich mit ihrem einen Ende abstützen. Als Kompensationselemente 119 könnte auch ein Ring aus einem Material, das einen anderen Wärmeausdehnungskoeffizienten als die Halterung 115 aufweist, vorgesehen sein. In diesem Ausführungsbeispiel ist die Halterung 115 und der Haltestern 123 aus C/C SiC. Entscheidend ist, daß das/die Kompensationselemente 119 eine Erstreckung in Richtung der optischen Achse 102 aufweist/aufweisen. In Abhängigkeit von dem verwendeten Spiegelkörper 5 ist das Material für die Kompensationslemente 119 auszuwählen, wobei in Abhängigkeit von deren Erstreckung in axialer Richtung bei einer Referenztemperatur und in Abhängigkeit von der zu erwartenden Brennpunktverschiebung pro Temperaturänderung das Material für die Kompensationselemente auszuwählen ist. Es ist dabei auch die Längenänderung der Halterung 115 in axialer Richtung in Abhängigkeit von der Temperatur zu berücksichtigen, so daß diese Längenänderung plus der Längenänderung der Kompensationselemente 119 die Verschiebung des Brennpunktes ergibt.

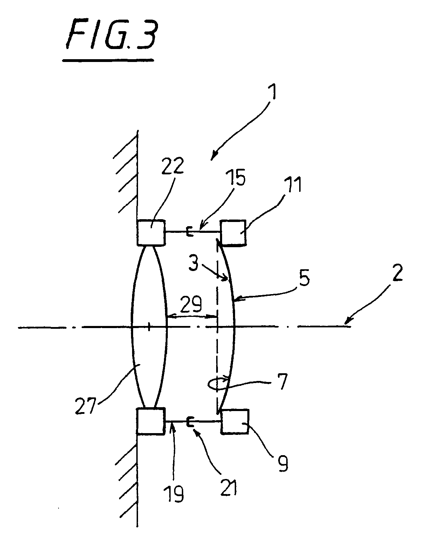

In Figur 3 ist ein optisches System 1 dargestellt. Dieses optische System umfaßt ein erstes optisches Element 3, hier ein Spiegel, der durch eine Spiegellagerung 11 gelagert ist und ein zweites optisches Element 27, hier eine Linse, die durch eine Lagerung 22 gelagert ist. Die Lagerung 22 ist ihrerseits wiederum ortsfest gelagert. Diese Linse könnte jedoch auch beweglich gelagert sein. Entscheidend, daß das durch die optischen Elemente 3 und 5 gebildete optische System 1 nahezu athermalisiert ist. Die Lagerung 22 ist mit der Lagerung 11 über Kompensationselemente 19 und einer Halterung 15 verbunden. Durch die Kompensationselemente 19 werden die Veränderungen der optischen Eigenschaften, insbesondere die Veränderung der Brennweite, wie bereits anhand des Teleskopes beschrieben, ausgeglichen.

### Bezugszeichenliste:

- 1: Optisches System
- 2: optische Achse
- 3: erstes optisches Element
- 5: Spiegelkörper
- 9: Lagerelement
- 11: Spiegellagerung
- 15: Halterung
- 19: Kompensationselement
- 27: zweites optisches Element
- 29: vorbestimmter Abstand
- 101: Teleskop
- 102: optische Achse
- 103: Primärspiegel
- 105: Spiegelkörper
- 107: Spiegel(oberfläche)
- 108: asphärischer Spiegel
- 109: Lagerelement
- 110: Vorsprünge
- 111: Spiegellagerung (Poliertechnik)
- 112: Spiegelträger
- 113: Tubus mit Kollimator
- 115: Halterung
- 117: Teleskoprohr
- 119: Kompensationselement
- 121: Füße
- 122: Aufnahme
- 123: Haltestern
- 125: Spiegelaufnahme
- 127: Sekundärspiegel
- 128: Spiegelfläche
- 129: vorbestimmter Abstand

## Patentansprüche

1. Teleskop mit einem Primärspiegel als erstes optisches Element und einem Sekundärspiegel als zweites optisches Element, wobei der Primärspiegel über eine Halterung mit dem Sekundärspiegel verbunden ist und die Halterung aus einem Material besteht, das einen Wärmeausdehnungskoeffizienten kleiner 1 x 10⁻⁶ aufweist, und mit Kompensationselementen zur Kompensation der temperaturbedingten Brennweitenänderung mittels einer Längenänderung zwischen Primär- und Sekundärspiegel insbesondere durch die Kompensationselemente, wobei die Kompensationselemente einerseits mit der Halterung und andererseits mit einer Spiegellagerung des Primärspiegels verbunden sind oder sich an dem Spiegelkörper abstützen, wobei der Primärspiegel (3, 103) einen eine Oberfläche (7) tragenden Spiegelkörper (5) aus Quarz oder SiN umfasst, wobei bei einem Spiegelkörper (5) aus Quarz die Kompensationselemente (19, 119) zumindest teilweise aus Titan bestehen und bei einem Spiegelkörper aus SiN die Kompensationselemente (19, 119) zumindest teilweise aus Aluminium oder Titan bestehen.

2. Teleskop nach Anspruch 1, **dadurch gekennzeichnet, dass** die Kompensationselemente (19, 119) in Bezug auf eine durch die optische Elemente (3,21, 103, 127) festgelegt optische Achse (2, 102) in axialer Richtung ausgerichtet sind.

3. Teleskop nach Anspruch 1 oder 2, **dadurch gekennzeichnet, dass** die Kompensationselemente (19, 119) im Bereich mindestens eines der optischen Elemente (3, 27, 103, 127) koaxial zu der durch die optischen Elemente (3, 27, 103, 127) festgelegten optischen Achse (2, 102) angeordnet sind.

4. Teleskop nach Anspruch 1, 2 oder 3, **dadurch gekennzeichnet, dass** die Kompensationselemente (119) koaxial zum Primärspiegel (103) angeordnet sind.

5. Teleskop nach Anspruch 1, **dadurch gekennzeichnet, dass** die Halterung ein Teleskoprohr mit einem dem Primärspiegel und einem dem Sekundärspiegel zugewandten Ende umfasst, und wobei als Kompensationselement (119) mindestens 3 Füße (121), die mit ihrem einen Ende das dem Primärspiegel (103) zugewandte Ende des Teleskoprohres (17) tragen und mit ihrem anderen Ende mit dem Primärspiegel (103) in Verbindung stehen, vorzugsweise sich auf einem die Spiegeloberfläche (107) des Primärspiegels (103) tragenden Spiegelträgers (105) abstützen, vorgesehen sind.

6. Teleskop nach Anspruch 1, **dadurch gekennzeichnet, dass** die Kompensationselemente (19, 119) einen von der Halterung (15, 115) abweichenden Wärmeausdehnungskoeffizienten, insbesondere einen größeren Wärmeausdehnungskoeffizienten, aufweisen.

7. Teleskop nach Anspruch 1, wobei der Spiegel (3, 103) einen Spiegelträger aus Zerodur umfasst, **dadurch gekennzeichnet, dass** die Kompensationselemente (19, 119) zumindestens teilweise aus Invar bestehen.

8. Teleskop mindestens nach Anspruch 1, **dadurch gekennzeichnet, dass** die Halterung (15, 115) aus C/C SiC als Material besteht.

9. Teleskop nach Anspruch1, **dadurch gekennzeichnet, dass** der Spiegel (3, 103) in Replikationstechnik hergestellt ist.

10. Teleskop nach mindestens einem der Ansprüche 1 - 9, **dadurch gekennzeichnet, dass** die Halterung (15, 115) aus einem Material mit einer Dichte von maximal 2,5 x 10³ kg/m³ hergestellt ist.

11. Teleskop nach mindestens einem der Ansprüche 1 - 10, **dadurch gekennzeichnet, dass** der Spiegelkörper (5, 105) direkt mit dem Lagerelement (9, 109) für die isostatische Lagerung verbunden ist und die Halterung (15, 115) auf dem Spiegelkörper (5, 105) gelagert ist.

## Claims

1. Telescope having a primary mirror as first optical element and a secondary mirror as second optical element, the primary mirror being connected to the secondary mirror via a holder and the holder consisting of a material which has a thermal expansion coefficient of less than 1 × 10⁻⁶, and having compensation elements to compensate the temperature-induced focal length change by means of a length change between primary and secondary mirror, in particular by means of the compensation elements, the compensation elements being connected at one end to the holder and at the other end to a mirror mount of the primary mirror or being supported on the mirror body, the primary mirror (3, 103) comprising a mirror body (5) made of quartz or SiN bearing a surface (7), the compensation elements (19, 119) consisting at least partly of titanium in the case of a mirror body (5) made of quartz, and the compensation elements (19, 119) consisting at least partly of aluminium or titanium in the case of a mirror body made of SiN.

2. Telescope according to Claim 1, **characterized in that** the compensation elements (19, 119) are aligned in the axial direction in relation to an optical axis (2, 102) defined by the optical elements (3, 21, 103, 127).

3. Telescope according to Claim 1 or 2, **characterized in that** the compensation elements (19, 119) in the region of at least one of the optical elements (3, 27, 103, 127) are arranged coaxially with the optical axis (2, 102) defined by the optical elements (3, 27, 103, 127).

4. Telescope according to Claim 1, 2 or 3, **characterized in that** the compensation elements (119) are arranged coaxially with the primary mirror (103).

5. Telescope according to Claim 1, **characterized in that** the holder comprises a telescope tube having one end facing the primary mirror and one end facing the secondary mirror, and the compensation element (119) provided bearing at least 3 feet (121), which with their one end carry the end of the telescope tube (17) that faces the primary mirror (103) and at their other end are connected to the primary mirror (103), preferably being supported on a mirror carrier (105) that carries the mirror surface (107) of the primary mirror (103).

6. Telescope according to Claim 1, **characterized in that** the compensation elements (19, 119) have a thermal expansion coefficient that differs from the holder (15, 115), in particular a higher thermal expansion coefficient.

7. Telescope according to Claim 1, the mirror (3, 103) comprising a mirror carrier made of Zerodur, **characterized in that** the compensation elements (19, 119) consist at least partly of Invar.

8. Telescope at least according to Claim 1, **characterized in that** the holder (15, 115) consists of C/C SiC as material.

9. Telescope according to Claim 1, **characterized in that** the mirror (3, 103) is produced by the replication technique.

10. Telescope according to at least one of Claims 1 - 9, **characterized in that** the holder (15, 115) is produced from a material with a density of at most 2.5 × 10³ kg/m³.

11. Telescope according to at least one of Claims 1 - 10, **characterized in that** the mirror body (5, 105) is connected directly to the bearing element (9, 109) for the isostatic mounting, and the holder (15, 115) is mounted on the mirror body (5, 105).

## Revendications

1. Télescope ayant un miroir primaire en tant que premier élément optique et un miroir secondaire en tant que deuxième élément optique, le miroir primaire étant lié par un support au miroir secondaire et le support étant constitué d'un matériau, qui présente un coefficient de dilation thermique inférieur à 1 x 10⁻⁶, et avec des éléments de compensation pour compenser la modification de la longueur focale conditionnée par la température au moyen d'une modification de longueur entre le miroir primaire et le miroir secondaire en particulier à l'aide des éléments de compensation, les éléments de compensation étant liés d'une part au support et d'autre part à un montage de miroir du miroir primaire ou prenant appui sur le corps de miroir, le miroir primaire (3, 103) comprenant un corps de miroir (5) constitué de quartz ou de SiN, portant une surface (7), les éléments de compensation (19, 119) étant constitués au moins partiellement de titane dans le cas d'un corps de miroir (5) en quartz, et les éléments de compensation (19, 119) étant constitués au moins partiellement d'aluminium ou de titane dans le cas d'un corps de miroir en SiN.

2. Télescope selon la revendication 1, **caractérisé en ce que** les éléments de compensation (19, 119) sont orientés dans la direction axiale par rapport à un axe optique (2, 102) défini par les éléments optiques (3, 21, 103, 127).

3. Télescope selon la revendication 1 ou 2, **caractérisé en ce que** les éléments de compensation (19, 119) dans la région d'au moins l'un des éléments optiques (3, 27, 103, 127) sont disposés de façon coaxiale par rapport à l'axe optique (2, 102) défini par les éléments optiques (3, 27, 103, 127).

4. Télescope selon la revendication 1, 2 ou 3, **caractérisé en ce que** les éléments de compensation (119) sont disposés de façon coaxiale par rapport au miroir primaire (103).

5. Télescope selon la revendication 1, **caractérisé en ce que** le support comprend un tube de télescope avec une extrémité tournée vers le miroir primaire et une extrémité tournée vers le miroir secondaire, et au moins 3 pieds (121) étant prévus en tant qu'élément de compensation (119) qui portent avec l'une de leurs extrémités, l'extrémité tournée vers le miroir primaire (103) du tube de télescope (17), et qui sont en liaison avec le miroir primaire (103) par leur autre extrémité, qui prennent appui de préférence sur un support de miroir (105) portant la surface de miroir (107) du miroir primaire (103).

6. Télescope selon la revendication 1, **caractérisé en ce que** les éléments de compensation (19, 119) présentent un coefficient de dilatation thermique qui diffère de celui du support (15, 115), en particulier un coefficient de dilatation thermique plus important.

7. Télescope selon la revendication 1, le miroir (3, 103) comprenant un support de miroir en zérodur, **caractérisé en ce que** les éléments de compensation (19, 119) sont constitués au moins partiellement d'invar.

8. Télescope au moins selon la revendication 1, **caractérisé en ce que** le support (15, 115) est constitué de C/C SiC en tant que matériau.

9. Télescope selon la revendication 1, **caractérisé en ce que** le miroir (3, 103) est fabriqué selon une technique de réplication.

10. Télescope selon au moins l'une des revendications 1 à 9, **caractérisé en ce que** le support (15, 115) est fabriqué à partir d'un matériau ayant une masse volumique de 2,5 x 10³ kg/m³ au maximum.

11. Télescope selon au moins l'une des revendications 1 à 10, **caractérisé en ce que** le corps de miroir (5, 105) est lié directement à l'élément de montage (9, 109) pour le montage isostatique et le support (15, 115) est monté sur le corps de miroir (5, 105).
